(19) Europäisches Patentamt
European Patent Office
Office européen des brevets

(11) **EP 4 737 999 A1**

(12) **EUROPEAN PATENT APPLICATION**
published in accordance with Art. 153(4) EPC

(43) Date of publication:
06.05.2026 Bulletin 2026/19

(21) Application number: 24831964.2

(22) Date of filing: 26.06.2024

(51) International Patent Classification (IPC):
*G02F 1/377* (2006.01)

(52) Cooperative Patent Classification (CPC):
G02F 1/377

(86) International application number:
PCT/JP2024/023094

(87) International publication number:
WO 2025/005104 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.06.2023 JP 2023105432

(71) Applicants:
• The University of Osaka
Osaka 565-0871 (JP)
• NICHIA CORPORATION
Tokushima 774-8601 (JP)

(72) Inventors:
• TANIKAWA, Tomoyuki
Suita-shi, Osaka 565-0871 (JP)
• KATAYAMA, Ryuji
Suita-shi, Osaka 565-0871 (JP)
• UEMUKAI, Masahiro
Suita-shi, Osaka 565-0871 (JP)
• HONDA, Hiroto
Suita-shi, Osaka 565-0871 (JP)
• OKADA, Masanori
Anan-shi, Tokushima 774-8601 (JP)

(74) Representative: Betten & Resch
Patent- und Rechtsanwälte PartGmbB
Maximiliansplatz 14
80333 München (DE)

(54) **WAVELENGTH CONVERSION ELEMENT, OPTICAL CIRCUIT USING SAME, AND LIGHT SOURCE DEVICE**

(57) To provide a wavelength conversion element that can use a high-quality crystal part with a simple configuration. The wavelength conversion element includes: a substrate having a main surface; and an optical waveguide disposed on the main surface of the substrate. A core of the optical waveguide includes a polar member having a second-order nonlinear optical constant, and a first nonpolar member adjacent to the polar member in a direction parallel to the main surface of the substrate. In a cross section orthogonal to an optical axis of the optical waveguide, one or both of lateral surfaces of the polar member and the first nonpolar member are in contact with each other.

FIG.1

## Description

Technical Field

The present disclosure relates to a wavelength conversion element, an optical circuit using the same, and a light source device.

Background Art

When light of a high intensity is incident on a substance having a nonlinear optical effect, nonlinear polarization proportional to the square or cube of an optical electric field is generated. The second-order nonlinear optical effects include sum frequency generation and difference frequency generation, and are used for second harmonic generation (SHG), optical parametric amplification, and the like. Wavelength conversion is performed by using these nonlinear optical effects. As a wavelength converter, a wavelength conversion waveguide configured by periodic reverse polarization of a ferroelectric of lithium niobate (LN), lithium tantalate (LT), or the like is generally known. The microfabrication of such a waveguide is difficult and a damage threshold is low in a visible light band.

A method has been proposed in which GaN layers are grown in opposing directions from both sidewalls of a groove formed in a substrate, and a waveguide element for wavelength conversion is manufactured by a first crystal region and a second crystal region having c-axes opposite to each other (for example, see Patent Document 1). In addition, a quasi-phase matching waveguide has been proposed in which an AlN thin film having a second-order nonlinear optical constant and $HfO_2$ with no polarization are sequentially layered on a surface of a substrate (for example, see Non-Patent Documents 1 and 2).

Citation List

Patent Literature

Patent Document 1: JP 2018-194617 A

Non-Patent Literature

Non-Patent Document 1: Design of Lateral Quasi-Phase Matched HfO2/AlN Waveguides for 230 nm Far-Ultraviolet Second Harmonic Generation, Proceedings of the 82nd Autumn Meeting of the Japan Society of Applied Physics, 2021, Lecture No. 12p-N101-7
Non-Patent Document 2: Manufacturing of HfO2/AlN Lateral Quasi-Phase Matched Channel Waveguides for 230 nm Far-Ultraviolet Second Harmonic Generation, Proceedings of the 69th Spring Meeting of the Japan Society of Applied Physics, 2022, Lecture No. 26p-E203-6

Summary of Invention

Technical Problem

In the method of growing the GaN layers having the c-axes in the opposite directions in the groove, the manufacturing process is complicated, and the quality of a crystal in the vicinity of an interface with the substrate is insufficient. In the configuration in which the AlN thin film and the $HfO_2$ are layered, the thickness of the AlN thin film is small, and a high-quality crystal thin film is difficult to grow. According to one aspect of the present disclosure, a wavelength conversion element that can use a high-quality crystal part with a simple configuration can be provided.

Solution to Problem

In an embodiment, a wavelength conversion element includes:

a substrate having a main surface; and
an optical waveguide disposed on the main surface of the substrate,
in which a core of the optical waveguide includes a polar member having a second-order nonlinear optical constant,
and a first nonpolar member adjacent to the polar member in a direction parallel to the main surface of the substrate, and

in a cross section orthogonal to an optical axis of the optical waveguide, one or both of lateral surfaces of the polar member and the first nonpolar member are in contact with each other.

Advantageous Effects of Invention

A wavelength conversion element that can use a high-quality crystal part with a simple configuration is implemented.

Brief Description of Drawings

FIG. 1 is a schematic perspective view of a wavelength conversion element of a first embodiment.
FIG. 2 is a cross-sectional view orthogonal to an optical axis in FIG. 1.
FIG. 3 is a diagram schematically illustrating a waveguide mode propagating through an optical waveguide of the wavelength conversion element.
FIG. 4 is a schematic diagram of a first modified example of the wavelength conversion element.
FIG. 5A is a diagram illustrating a process for manufacturing an optical waveguide of the wavelength conversion element of FIG. 4.
FIG. 5B is a diagram illustrating the process for manufacturing the optical waveguide of the wavelength conversion element of FIG. 4.
FIG. 5C is a diagram illustrating the process for manufacturing the optical waveguide of the wavelength conversion element of FIG. 4.
FIG. 5D is a diagram illustrating the process for manufacturing the optical waveguide of the wavelength conversion element of FIG. 4.
FIG. 6A is a schematic diagram of a second modified example of the wavelength conversion element.
FIG. 6B is a schematic diagram of a third modified example of the wavelength conversion element.
FIG. 6C is a schematic diagram of yet another modified example of the wavelength conversion element.
FIG. 7 is a model diagram for calculating a core width for phase matching.
FIG. 8A is a diagram illustrating an electromagnetic distribution of a $TM_{00}$ mode of an optical waveguide.
FIG. 8B is a diagram illustrating an electromagnetic distribution of a $TM_{20}$ mode of an optical waveguide.
FIG. 9 is a diagram illustrating a calculation result of the core width for phase matching in a transverse mode.
FIG. 10 is a cross-sectional view of a wavelength conversion element of a second embodiment.
FIG. 11 is a cross-sectional view of a wavelength conversion element of a third embodiment.
FIG. 12 is a schematic diagram of light propagating through the wavelength conversion element of the third embodiment.
FIG. 13 is a cross-sectional view of a wavelength conversion element of a fourth embodiment.
FIG. 14 is a cross-sectional view of a wavelength conversion element of a modified example of the fourth embodiment.
FIG. 15 is a cross-sectional view of a wavelength conversion element of a fifth embodiment.
FIG. 16 is a cross-sectional view of a wavelength conversion element of a modified example of the fifth embodiment.
FIG. 17 is a schematic diagram of a light source device using the wavelength conversion member of any of the embodiments.
FIG. 18 is a schematic diagram of an optical circuit using the wavelength conversion member of any of the embodiments.

Description of Embodiments

Embodiments for carrying out the present disclosure are described below with reference to the drawings. The following description is intended to embody technical concepts of the present disclosure, and the present disclosure is not limited to the following unless specifically stated. In each drawing, members having identical functions may be denoted by the same reference characters. For ease of explanation or understanding of the gist, the embodiments may be illustrated separately for convenience, but the configurations illustrated in different embodiments and examples can be partially substituted or combined. In the embodiments to be described below, differences from the embodiment described before are mainly described, and redundant descriptions of commonalities with the embodiment described before are sometimes omitted. The size, positional relationship, and other features of members illustrated in the drawings may be exaggerated in order to clarify explanation.

In the following embodiments, for the sake of simplicity, SHG for converting light having an angular frequency $\omega_1$

into light having an angular frequency $\omega_2$ (= $2 \times \omega_1$) is mainly described as an example. However, a wavelength conversion element of the embodiment can also be used for applications other than SHG. For example, it is possible to perform wavelength conversion in the reverse process of SHG (that is, conversion from the angular frequency $\omega_2$ to the angular frequency $\omega_1$). In addition, the wavelength conversion element can also be used as a wavelength conversion element that performs optional wavelength conversion by sum frequency generation or difference frequency generation within a range in which a phase matching condition to be described below is satisfied.

In an optical waveguide, a waveguide mode is not exactly separable into a TM mode and a TE mode, and includes components of both of these modes. This is called a TM-like mode or a TE-like mode. In the specification, the mode is simply referred to as a TM mode for simplification of description, which represents a TM-like mode.

First Embodiment

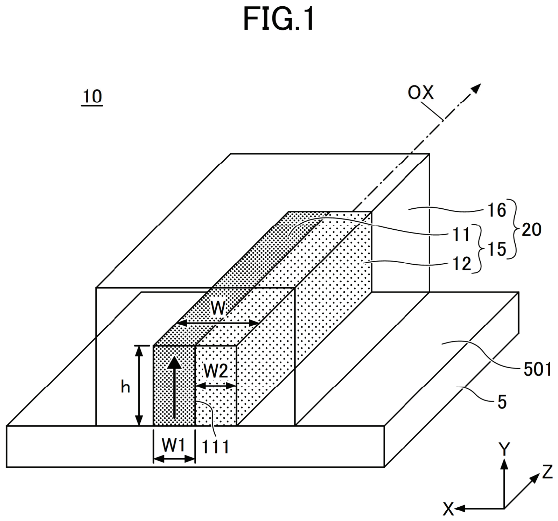

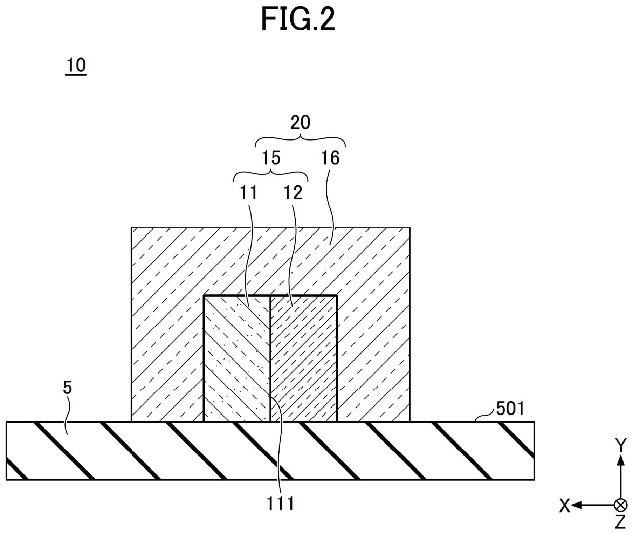

FIG. 1 is a schematic perspective view of a wavelength conversion element 10 of a first embodiment. FIG. 2 is a cross-sectional view orthogonal to an optical axis OX in FIG. 1. In the coordinate system of FIGS. 1 and 2, a direction parallel to the optical axis OX of the wavelength conversion element 10 is defined as a Z direction, and a direction normal to a surface of a substrate 5 on an XY plane orthogonal to the optical axis OX is defined as a Y direction.

The wavelength conversion element 10 includes the substrate 5 having a main surface 501, and an optical waveguide 20 disposed on the main surface 501 of the substrate 5. A core 15 of the optical waveguide 20 includes a polar member 11 having a second-order nonlinear optical constant and a first nonpolar member 12 adjacent to the polar member 11 in an X direction parallel to the main surface 501 of the substrate 5. In the XY plane that is a cross section orthogonal to the optical axis OX of the optical waveguide 20, one or both of lateral surfaces 111 of the polar member 11 are in contact with the first nonpolar member 12. This allows a region having a relatively high crystal quality to serve as a waveguide path, thereby reducing optical loss due to the waveguide itself.

The expression "direction parallel" to the main surface 501 does not require the main surface 501 and an X axis to be exactly parallel to each other in the XY plane, but includes a manufacturing error and a process error, and may include a deviation of, for example, $\pm$ 2° or less, preferably $\pm$ 0.1° or less. While one lateral surface 111 of the polar member 11 is disposed in contact with the first nonpolar member 12 in the example of FIG. 1, as described below, the first nonpolar member 12 may be disposed in contact with both lateral surfaces of the polar member 11. The lateral surface 111 does not need to be perpendicular to the main surface 501 of the substrate 5, and the shape of the polar member 11 in an XY cross section may be a trapezoid or an inverted trapezoid.

The polar member 11 and the first nonpolar member 12 that are in contact with each other in the lateral direction (X direction) on the main surface 501 of the substrate 5 constitute the core 15 of the optical waveguide 20. The polar member 11 is made of, for example, a wurtzite crystal having polarization along the c-axis direction. The polar member 11 can receive incident light having a higher power density compared to LN or LT, and enhance the conversion efficiency of the wavelength conversion element 10. As indicated by an upward arrow in FIG. 1, the c-axis of the polar member 11 formed as a film on the substrate 5 is perpendicular to 501 of the substrate 5, and the polar member 11 has polarization along the direction of the arrow. AlN, GaN, ZnO, and the like represented by a general formula AB have a wurtzite crystal structure. In the embodiment, the polar member 11 is made of $Al_xGa_{1-x}N$ ($0 \leq x \leq 1$). By adjusting the value of x, the difference in the refractive index between the polar member 11 and the first nonpolar member 12 can be reduced.

The first nonpolar member 12 is a substance having no polarity. The first nonpolar member 12 is preferably formed as an amorphous layer. The first nonpolar member 12 may be selected from the group consisting of $Nb_2O_5$, $Ta_2O_5$, $TiO_2$, $HfO_2$, $ZrO_2$, and $Si_3N_4$. Note that the composition is not necessarily the same as the stoichiometric composition, and may be in a state in which the amount of oxygen or nitrogen is larger or smaller than that in the stoichiometric composition. Moreover, the first nonpolar member 12 may be a composite material including two or more of the above materials. Alternatively, the refractive index may be adjusted by doping impurities. This can reduce the difference between the refractive index of the first nonpolar member 12 and the refractive index of the polar member 11, and thus allowing for increasing the number of combinations of angular frequencies for satisfying phase matching between the light having the angular frequency $\omega_1$ and the light having the angular frequency $\omega_2$. The core 15 is formed by arranging the first nonpolar member 12 and the polar member 11 to be adjacent to each other on the main surface 501 of the substrate 5 not in the layering direction, but in the lateral direction (X direction). This can increase the thickness of the polar member 11, and improve the quality of the crystal. By arranging the first nonpolar member 12 having no polarity to be in contact with the lateral surface 111 of the polar member 11, spatial modulation is introduced into the core 15 of the optical waveguide 20. This modulation reduces the mutual cancellation of coupling constants $\kappa$ to be described below by the positive and negative antinodes of an amplitude in a high-order transverse mode generated in the core 15. The spatial modulation described herein is modulation depending on the presence or absence of a second-order nonlinear optical constant, and contributes to the efficiency of wavelength conversion.

The core 15 made up of the polar member 11 and the first nonpolar member 12 is surrounded by a cladding 16. The cladding 16 preferably covers both the lateral surfaces and the upper surface of the core 15. As the cladding 16 surrounding the core 15, an air layer may be used, or a layer made of a material having a lower refractive index than that of the core 15 may be provided. As the material having a lower refractive index than that of the core 15, silicon oxide ($SiO_2$), silicon oxynitride (SiON), aluminum oxide ($Al_2O_3$), aluminum oxynitride (AlON), or the like may be used. The refractive index of the cladding is one of the parameters that determine a mode dispersion, and is set as appropriate.

A height h of the core 15 in the XY cross section corresponds to the film thickness of the polar member 11 and the first nonpolar member 12. The height h of the core is a thickness sufficient to increase the confinement of light, and is in a range from 300 nm to 1 $\mu$m as an example. A width W of the core 15 is the sum of a width W1 of the polar member 11 and a width W2 of the first nonpolar member 12. In the embodiment, the width W of the core 15 relative to the width W1 of the polar member 11 is set in such a manner that a $TM_{00}$ mode of a fundamental wave and a $TM_{20}$ mode of a second harmonic wave satisfy a phase matching condition. The phase matching condition is described below. From the viewpoint of increasing a portion of the polar member 11 with a satisfactory crystal quality, the height h of the polar member 11 may be set to be equal to or greater than the width W1. An aspect ratio (h/W) of the height h to the width W of the core 15 may be, for example, in a range from 1 to 5, preferably in a range from 1 to 3. An aspect ratio of the height h to the width W1 of the polar member 11 (h/W1) may be, for example, in a range from 2 to 10, preferably in a range from 2 to 6. An aspect ratio of the height h to the width W2 of the first nonpolar member 12 (h/W2) may be, in a range from 2 to 10, preferably in a range from 2 to 6. The width W1 of the polar member 11 may be in a range from 0.5 times to 2 times the width W2 of the first nonpolar member 12.

When light incident on the optical waveguide 20 is weak, the magnitude of the polarization of the polar member 11 is proportional to the magnitude of an optical electric field. On the other hand, when light having a sufficient intensity is incident on the optical waveguide 20, second-order and/or third-order nonlinear polarization appears in the polarization of the polar member 11. The effect resulting from this nonlinear polarization is a nonlinear optical effect. A typical example of the second-order nonlinear optical effect is SHG. The interaction of two photons having the same angular frequency with a nonlinear optical medium generates a photon with twice the energy of the original photon. In other words, photons with a doubled angular frequency are generated.

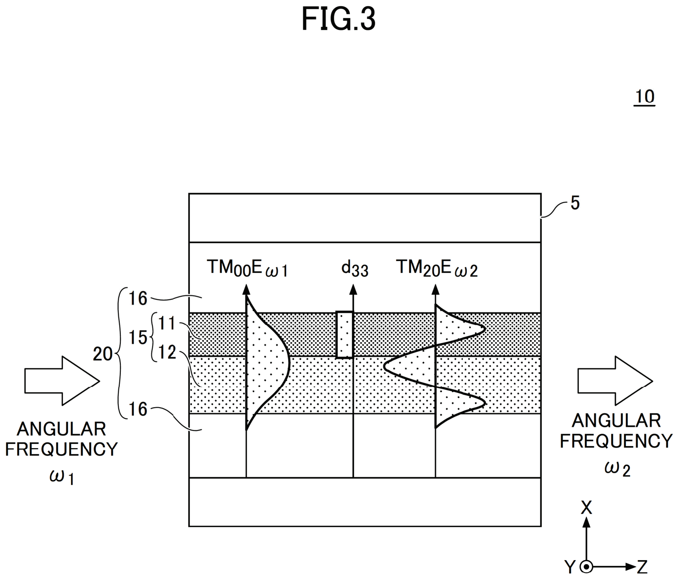

FIG. 3 schematically illustrates a waveguide mode propagating through the optical waveguide 20. In FIG. 3, the intensity distribution of pump light and signal light in the XY cross section is shown by integrating in the Y direction and projecting the integral on an XZ plane. The pump light in the $TM_{00}$ mode with the angular frequency $\omega_1$ is incident on the wavelength conversion element 10 in the Z direction. The incidence of the pump light induces nonlinear polarization in the polar member 11 of the core 15, and signal light having the angular frequency $\omega_2$ different from $\omega_1$ is generated. $\omega_2$ is, for example, twice the angular frequency $\omega_1$. In this example, the waveguide mode of the signal light having the angular frequency $\omega_2$ is the $TM_{20}$ mode.

The polar member 11 of the core 15 has a second-order nonlinear optical constant d. The second-order nonlinear optical constant is a third-order tensor, and is represented by $d_{ij}$, which is a component of a $3 \times 6$ matrix, by using a contracted notation when the energy of light input to and output from the polar member 11 is sufficiently smaller than the band gap energy of the polar member 11. The second-order nonlinear optical constant $d_{ij}$ is proportional to a second-order nonlinear susceptibility $\chi^{(2)}$. The second-order nonlinear optical constant has different components having finite values depending on the symmetry of the crystal constituting the polar member 11. The polar member 11 has, for example, a second-order nonlinear optical constant $d_{33}$. When the crystal has the c-axis in a direction perpendicular to the main surface 501 of the substrate 5, $d_{33}$ may be used as a maximum component. The signal light with the angular frequency $\omega_2$ generated by the interaction between the incident pump light and the polar member 11 propagates through the optical waveguide 20 in the $TM_{20}$ mode and is output from the wavelength conversion element 10. In the present embodiment, the second-order nonlinear optical constant is not limited to $d_{33}$. Other components such as $d_{31}$ may be used in consideration of the direction of the polarity and the direction of the optical electric field incident on the polar member 11.

In the wavelength conversion element 10, in order to efficiently generate the second harmonic by using the second-order nonlinear optical effect, the pump light and the signal light need to satisfy a phase matching condition. In general, since a refractive index is dependent on an angular frequency, it is difficult to achieve phase matching in a state with two angular frequencies $\omega_1$ and $\omega_2$. In order to solve this problem, phase matching with birefringence or quasi-phase matching with periodic polarization inversion is used. In this embodiment, phase matching using a transverse mode is used. Where the refractive index of the material of the core 15 sensed by light having the wavelength of the pump light (that is, the light having the angular frequency $\omega_1$) is $n_{mat}(\omega_1)$, and the refractive index of the material of the core 15 sensed by light having the wavelength of the signal light (that is, the light having the angular frequency $\omega_2$) is $n_{mat}(\omega_2)$, the refractive index of the core material sensed by light having a short wavelength is greater than the refractive index of the core material sensed by light having a long wavelength when the band gap energy of the wavelength conversion element 10 is sufficiently greater than the energy of the pump light and the signal light, as expressed below.

$$n_{mat}(\omega_1) < n_{mat}(\omega_2)$$

On the other hand, due to the dependence of an effective refractive index of the core 15 on the transverse mode (mode dispersion), an effective refractive index $n_{00}$ of the core 15 in a fundamental mode is greater than an effective refractive index $n_{m0}$ in a higher-order transverse mode, as expressed below.

$$n_{00} > n_{m0}$$

Here, m is the number of mode order. The effective refractive indices in the respective modes sensed by the pump light and the signal light are made equal to each other by using the dependence of the effective refractive index on the transverse mode, $n_{00}(\omega_1) = n_{m0}(\omega_2)$ can be satisfied. That is, the pump light and the signal light in the core 15 can satisfy the phase matching condition.

The coupling constant $\kappa$ between the mode with the angular frequency $\omega_1$ and the mode with $\omega_2$ is expressed by the following mathematical formula.

[Math. 1]

$$\kappa \propto \iint \chi^{(2)}(x,y) E_{\omega 2}(x,y) E_{\omega 1}^2(x,y) dx dy \quad (\omega_1 < \omega_2)$$

The coupling constant $\kappa$ is proportional to a value obtained by multiplying the second-order nonlinear susceptibility $\chi^{(2)}$, the square of an electric field $E_{\omega 1}$, and an electric field $E_{\omega 2}$, and integrating the product with respect to the core cross section. The second-order nonlinear susceptibility $\chi^{(2)}$ is zero in the region of the first nonpolar member 12.

Accordingly, in the example of FIG. 3, the optical waveguide 20 is designed such that the first nonpolar member 12 includes one positive antinode and one negative antinode in the electric field distribution in the $TM_{20}$ mode, and thus, only the remaining antinode contributes to the coupling constant $\kappa$. This can increase the coupling constant $\kappa$ as compared with when phase matching is achieved in a core made of only a polar member.

The coupling constant $\kappa$ of the core 15 is dependent on the overlap of the electric fields in the $TM_{00}$ mode and the $TM_{20}$ mode in the cross-sectional area of the core 15. For example, the optical waveguide 20 is designed such that an interface between the polar member 11 and the first nonpolar member 12 is located at the node of the amplitude of the signal light in the $TM_{20}$ mode, thereby reducing the positive and negative mutual cancellation in the overlap of the $TM_{00}$ mode and the $TM_{20}$ mode in the polar member 11. This configuration can increase the coupling constant $\kappa$ as compared with a configuration in which the positive and negative antinodes in a higher-order mode cancel each other out when the core 15 is made only of the polar member 11. In FIG. 3, the transverse mode in the Y direction is preferably a fundamental mode. This increases the coupling constant $\kappa$, thereby enabling efficient wavelength conversion.

First Modified Example

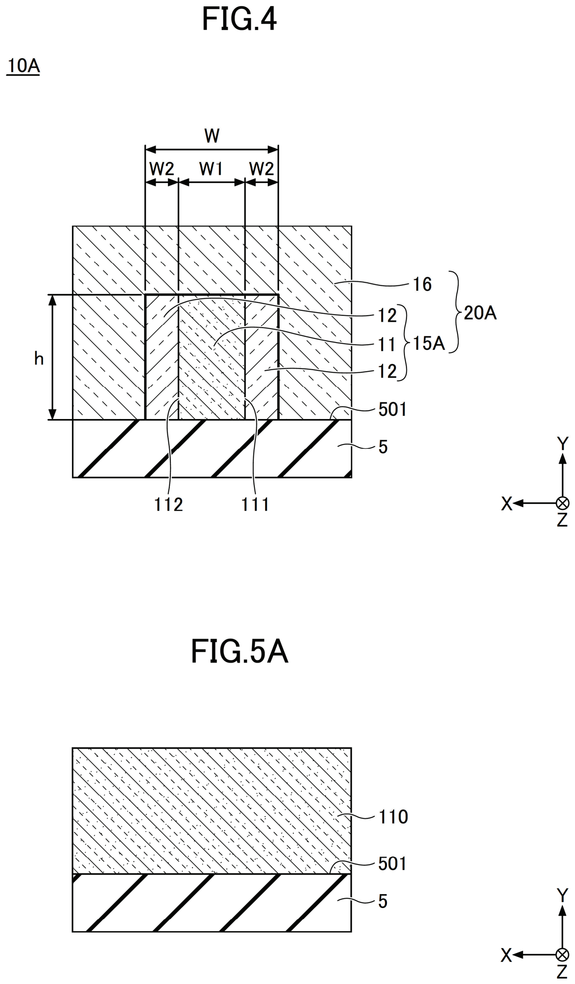

FIG. 4 is a schematic diagram of a wavelength conversion element 10A as a first modified example of the wavelength conversion element 10. The wavelength conversion element 10A has an optical waveguide 20A on the main surface 501 of the substrate 5. The optical waveguide 20A includes a core 15A and a cladding 16. The core 15A has a polar member 11 and first nonpolar members 12 disposed in contact with both of lateral surfaces 111 and 112 of the polar member 11. In the XY cross section orthogonal to the optical axis OX (see FIG. 1), the polar member 11 is sandwiched between the first nonpolar members 12. Similarly to the wavelength conversion element 10 in FIGS. 1 and 2, the wavelength conversion element 10A has a simple configuration. The polar member 11 and the first nonpolar members 12 can be formed to be thick in the Y direction, so that the crystal quality can be improved. In addition, with a highly symmetrical shape, the polar material can be disposed in a region in each of the $TM_{00}$ mode and the $TM_{20}$ mode, where the electric field intensity is high.

The electric field distribution in the $TM_{20}$ mode has three antinodes. For example, the coupling constant $\kappa$ in Math. 1 can be increased by setting the width of the core 15A such that the polar member 11 includes at least the middle antinode, and two first nonpolar members 12 include their respective vertices of the outer antinodes. Accordingly, the wavelength conversion can be efficiently performed. A width W1 of the polar member 11 may be, for example, in a range of 0.5 times to 3 times, preferably in a range of 1 time to 2 times, the sum of widths W2 of the two first nonpolar members 12 (W - W1). An aspect ratio of a height h to a width W of the core 15 (h/W) may be, for example, in a range from 0.5 to 10, preferably in a range from 0.5 to 6.

Process of Manufacturing Core 15A

FIGS. 5A to 5D are views illustrating a process of manufacturing the core 15A of the wavelength conversion element 10A. In FIG. 5A, a layer 110 made of a polar material is formed on the main surface 501 of the substrate 5. As the substrate 5, an appropriate substrate such as a sapphire substrate, a GaN substrate, a quartz substrate, an optical glass substrate, a resin substrate, or a silicon substrate with a silicon oxide film can be selected. The substrate 5 is preferably a sapphire substrate or a GaN substrate. The layer 110 made of a polar material can be formed with a relatively high quality. As the polar material, a material having a wurtzite crystal structure such as AlN, GaN, AlGaN, or ZnO is used. For wavelengths near 800 nm, the refractive index of GaN is 2.35, and the refractive indices of AlN and ZnO are 2.18 and 2.10, respectively. The layer 110 made of the polar material and having a good crystal quality is formed by a physical vapor deposition (PVD) method such as sputtering or vapor deposition, or a chemical vapor deposition (CVD) method. When a film of AlGaN is formed as the layer 110 made of the polar material, the composition of Al and Ga may be adjusted to obtain a desired refractive index. The thickness of the layer 110 made of the polar material is, for example, in a range from 300 nm to 1000 nm. Because the phase matching condition can be satisfied by controlling the transverse mode in the width direction (X direction) of the core, the layer 110 made of the polar material can be made relatively thick. This can improve the crystal quality of the layer 110 made of the polar material.

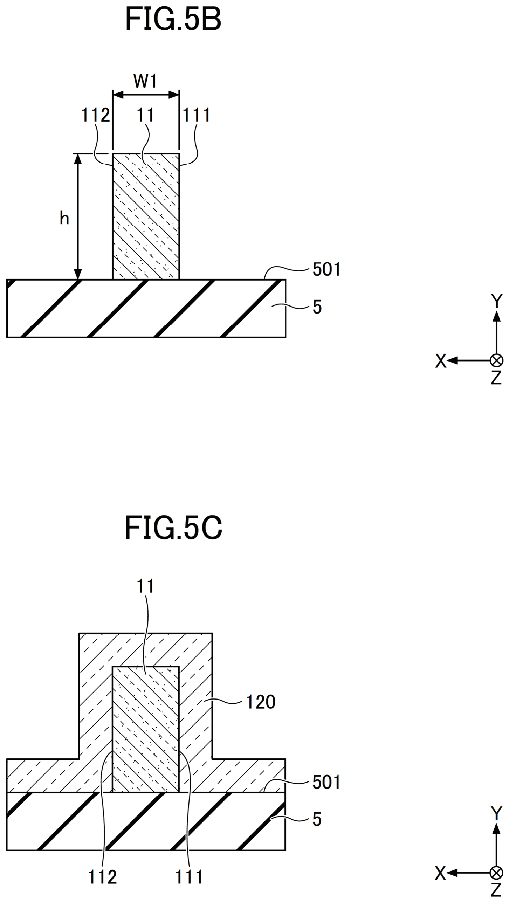

In FIG. 5B, the layer 110 is processed into a predetermined shape to obtain the polar member 11. The polar member 11 is obtained by processing the layer 110 through a mask patterned on the layer 110 in a predetermined shape. As illustrated in FIG. 1, the predetermined shape extends in the Z direction with the width W1 and the height h in the XY cross-section. In order to ensure the crystal quality of the polar member 11, the height h may be equal to or greater than the width W1. The aspect ratio of the height h to the width W1 (h/W1) may be in a range from 1 to 10, preferably in a range from 1.5 to 6. The shape in the XY cross-section is not necessarily a rectangle, but may be a trapezoid, an inverted trapezoid, or the like. Lateral surfaces 111 and 112 forming a predetermined angle with the main surface 501 of the substrate 5 can be formed by anisotropically etching the layer 110. The anisotropic etching may be, for example, a dry process which may be reactive ion etching. As described above, the polar member 11 is a material suitable for microfabrication, and can be processed to have a predetermined width.

In FIG. 5C, a layer 120 made of a nonpolar material is formed on the entire surface of the main surface 501, covering the polar member 11. The layer 120 made of a nonpolar material is an amorphous layer with no polarization. As the nonpolar material, a material having a refractive index relatively close to that of the polar member 11 is used. The difference between the refractive index of the polar member 11 and the refractive index of the layer 120 made of the nonpolar material may be, for example, in a range from 0.001 to 0.2, or in a range from 0.001 to 0.1. As an example, the nonpolar material is selected from the group consisting of $Nb_2O_5$, $Ta_2O_5$, $TiO_2$, $HfO_2$, $ZrO_2$, and $Si_3N_4$. Note that the composition is not necessarily the same as the stoichiometric composition, and may be in a state in which the amount of oxygen or nitrogen is larger or smaller than that in the stoichiometric composition. Moreover, the layer 120 made of the nonpolar material may be a layer made of a composite material including two or more of the above materials. Alternatively, the refractive index may be adjusted by doping impurities. This can reduce the difference between the refractive index of the layer 120 made of the nonpolar material and the refractive index of the polar member 11, thereby increasing the number of combinations of angular frequencies for implementing phase matching between the light having the angular frequency $\omega_1$ and the light having the angular frequency $\omega_2$. For example, when the polar member 11 is made of GaN, the layer 120 made of the nonpolar material may be made of $Nb_2O_5$ or $TiO_2$. When the polar member 11 is made of AlN, $Ta_2O_5$, $HfO_2$, $Si_3N_4$, or the like may be used. The layer 120 made of the amorphous nonpolar material is formed by a PVD method, a CVD method, an atomic layer deposition (ALD) method, or the like. The CVD method or the ALD method is used, and thus the layer 120 made of the nonpolar material and having high coatability can be formed on the lateral surfaces 111 and 112 of the polar member 11.

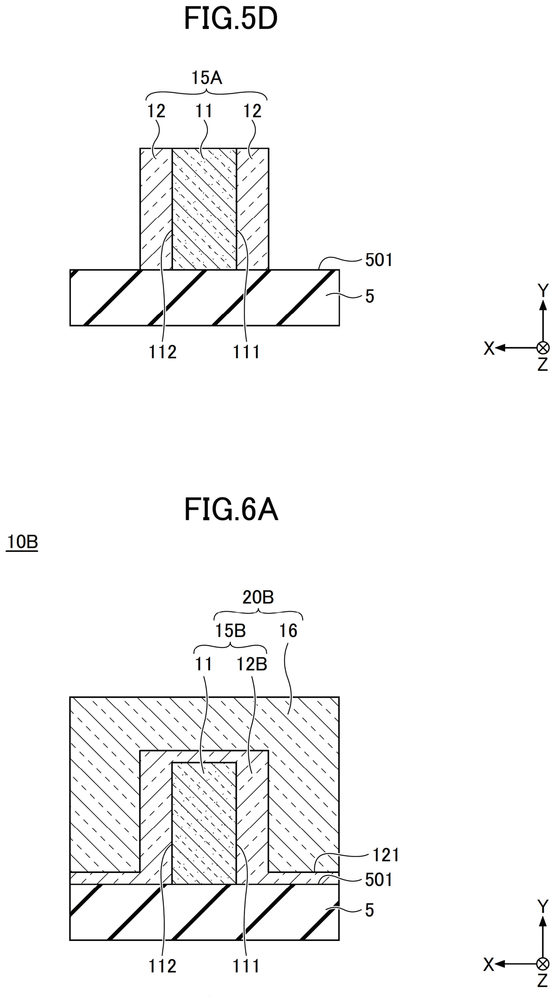

In FIG. 5D, the layer 120 made of the nonpolar material is processed by anisotropic etching to form the first nonpolar members 12 in contact with both the lateral surfaces 111 and 112 of the polar member 11. This results in the core 15A of the wavelength conversion element 10A. By etching the polar member 11 to a sufficient depth, the core 15A having a satisfactory crystal quality in a portion away from the substrate 5 is obtained. Concentrating light on the portion with satisfactory crystal quality reduces optical loss, so that conversion efficiency can be improved. The steps from FIGS. 5A to 5D can be implemented by a wafer process suitable for mass production, and the core 15A having a simple configuration can be manufactured by a simple process. Subsequently, the cladding 16 may be further formed. The cladding 16 may be air.

Second Modified Example

FIG. 6A is a schematic diagram of a wavelength conversion element 10B of a second modified example of the wavelength conversion element 10. An optical waveguide 20B of the wavelength conversion element 10B has a core 15B made up of a polar member 11 and a first nonpolar member 12B. The first nonpolar member 12B is in contact with both lateral surfaces 111 and 112 of the polar member 11 and an upper surface of the polar member 11. The time point at which the anisotropic etching ends is controlled in the step of FIG. 5D, and thus the core 15B having the shape in FIG. 6A is obtained. The anisotropic etching on the layer 120 made of the nonpolar material is ended before the upper surface of the polar member 11 is exposed, so that a thin film 121 made of the nonpolar material remains on the main surface 501 of the substrate 5. The core 15B having the shape in FIG. 6A is advantageous in maintaining the film thickness of the polar member 11 without excessively cutting the polar member 11. In addition, the thin film 121 made of the nonpolar material remains, so that the cutting of the first nonpolar member 12B in contact with the lateral surfaces of the polar member 11 can be reduced. Thus, an effective refractive index can be easily controlled.

Third Modified Example

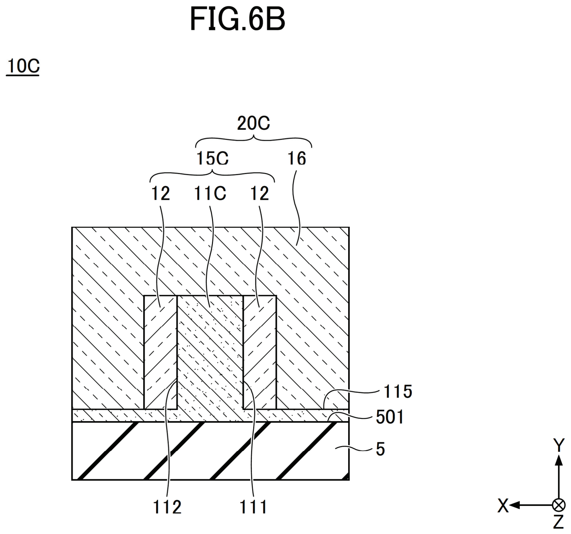

FIG. 6B is a schematic diagram of a wavelength conversion element 10C of a third modified example of the wavelength conversion element 10. An optical waveguide 20C of the wavelength conversion element 10C have a core 15C made up of a polar member 11C and first nonpolar members 12 on the main surface 501 of the substrate 5. The first nonpolar members 12B are in contact with both lateral surfaces 111 and 112 of the polar member 11 and an upper surface of the polar member 11. The time point at which the anisotropic etching on the layer 110 made of the polar material ends is controlled in the step of FIG. 5B, so that the core 15C having the shape in FIG. 6B is obtained. The anisotropic etching on the layer 110 made of the polar material is ended before the main surface 501 of the substrate 5 is exposed, so that a thin film 115 made of the polar material remains on the main surface 501 of the substrate 5, but light can be effectively confined inside the core 15C. The core 15C having the shape in FIG. 6B is also advantageous in ensuring the film thickness without excessively cutting the polar member 11.

Fourth Modified Example

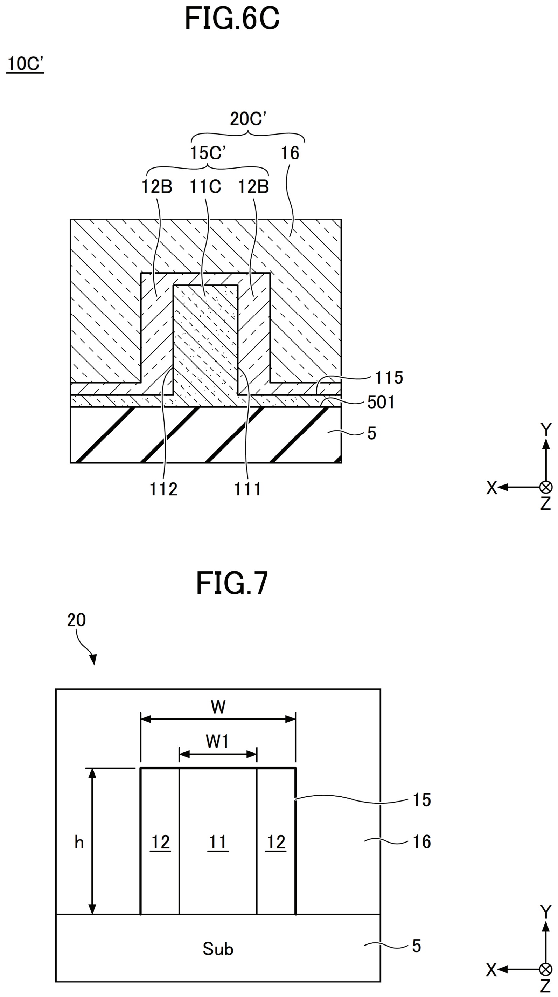

FIG. 6C is a schematic diagram illustrating yet another modified example of the wavelength conversion element 10. The configuration of 6A and the configuration of 6B may be combined into a configuration of a wavelength conversion element 10C ' . An optical waveguide 20C ' has a core 15C ' made up of a polar member 11C and a first nonpolar member 12B on the main surface 501 of the substrate 5. The first nonpolar member 12B covers a thin film 115 made of the polar material and the upper surface of the polar member 11C, and a cladding 16 covers the core 15C ' . Even in the configuration of FIG. 6C, the thickness can be ensured without excessively cutting the polar member 11C.

Evaluation of Core Width

FIG. 7 is a model diagram for obtaining a core width that satisfies the phase matching condition. In this example, the core shape in FIG. 4 is adopted as a model. The substrate 5 is made of sapphire, the polar member 11 of the core 15 is made of AlN, the first nonpolar members 12 sandwiching both lateral surfaces of the polar member 11 is made of $Ta_2O_5$, and the cladding 16 covering the core 15 is made of $Al_2O_3$. This allows the width and height of the core, the refractive index of the core, the refractive index of the cladding, and the refractive index of the substrate to be defined. From these pieces of information, the electromagnetic field distribution and the effective refractive index can be obtained by a finite element method. The height h of the core 15 is fixed to 400 nm, and the width W of the polar member 11 is fixed to 300 nm, while the width W of the core 15 is changed by changing the width of the first nonpolar member 12. Using this model, an effective refractive index $n_{cff}$ of the core 15 for light with a wavelength of 810 nm (angular frequency $\omega_1$) and light with a wavelength of 405 nm (angular frequency $\omega_2 (= 2 \times \omega_1)$) is calculated. As described above, in order that the optical waveguide 20 achieves phase matching by using the dependence of the effective refractive index $n_{cff}$ on the transverse mode (mode dispersion), the effective refractive index $n_{cff}$ in the fundamental wave $TM_{00}$ mode with a wavelength of 810 nm and the effective refractive index $n_{cff}$ in the second harmonic $TM_{20}$ mode with a wavelength of 405 nm need be the same or sufficiently close to each other.

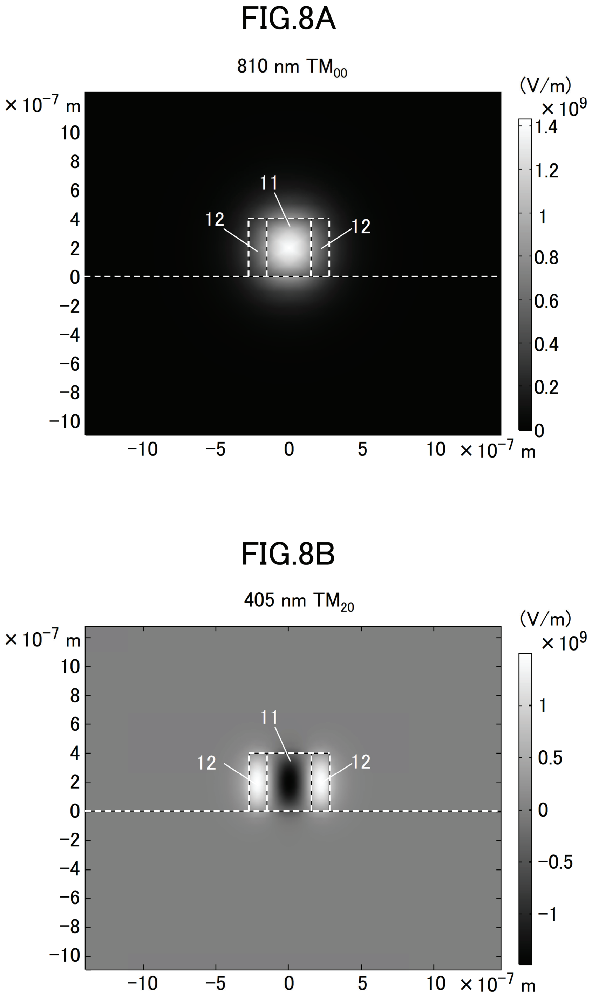

FIGS. 8A and 8B illustrate the electromagnetic field distributions in two transverse modes in the optical waveguide 20. The $TM_{00}$ mode with a wavelength of 810 nm illustrated in FIG. 8A is a waveguide mode of the pump light that is a fundamental wave. As in the schematic electric field intensity distribution illustrated in FIG. 3, one peak is present at the center of the core 15. The $TM_{20}$ mode with a wavelength of 405 nm illustrated in FIG. 8B is the $TM_{20}$ mode of the second harmonic. Three antinodes of the electric field are located one by one in one polar member 11 and two first nonpolar members 12.

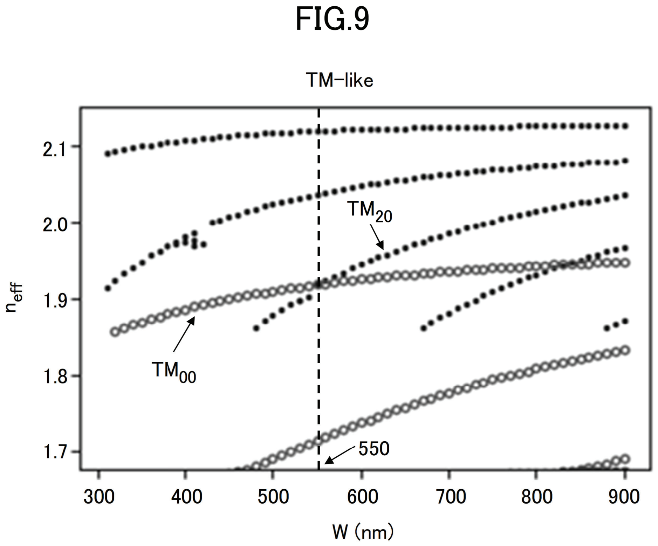

FIG. 9 illustrates the calculation results of the effective refractive indices $n_{cff}$ in the $TM_{00}$ mode and the $TM_{20}$ mode when the width W of the core 15 is changed in a state in which the width W1 of the polar member 11 is fixed to 300 nm. White circles represent the calculation results of a dispersion curve in the transverse mode (TM mode) with the angular frequency $\omega_1$. Black circles represent the calculation results of a dispersion curve in the transverse mode (TM mode) with the angular frequency $\omega_2$. When the width W of the core 15 is 550 nm, the effective refractive index in the $TM_{00}$ mode with the angular

frequency $\omega_1$ and the effective refractive index in the TM$_{20}$ mode with the angular frequency $\omega_2$ coincide with each other. Accordingly, when the width W1 of the polar member 11 is 300 nm, the width W of the core 15 is set to 550 nm, so that the fundamental wave TM$_{00}$ mode (810 nm) and the second harmonic TM$_{20}$ mode (405 nm) can be phase-matched. That is, the zero-order and second-order modes are used in the X direction, while the zero-order mode is used mutually in the Y direction for phase-matching. This increases the coupling constant $\kappa$, so that wavelength conversion can be efficiently performed.

In FIG. 9, dispersion curves indicated by black circles other than the dispersion curve of the second harmonic TM$_{20}$ (405 nm) are the TM$_{m0}$ mode of the second harmonic (m is an integer equal to 0, 1, 3, or more), and the presence of a plurality of higher-order modes is allowed when the width W of the core 15 is near 550 nm. Similarly, dispersion curves indicated by white circles other than the dispersion curve of the fundamental wave TM$_{00}$ (810 nm) are high-order modes (for example, first-order modes) of 810 nm, and the presence of high-order modes is allowed when the width W of the core 15 is near 550 nm. However, it can be seen from FIG. 9 that near this width, the higher-order mode of 810 nm is not phase-matched with the TM$_{20}$ mode of 405 nm. When the width W of the core 15 is further increased, exceeding 800 nm, a higher-order mode of 810 nm appears. However, in this width region, the fundamental wave TM$_{00}$ mode and the second harmonic TM$_{20}$ mode are not phase-matched.

From this, in the cross section orthogonal to the optical axis of the optical waveguide 20, the width of the core 15 is a width in which the number of modes that can be present for a component with a first angular frequency (first frequency component) is three or less, and is a width in which the number of modes that can be present for a harmonic component with a second angular frequency (second frequency component) greater than the first angular frequency is two or more. The width W of the core 15 may be in a range from 1.5 times to 4 times, preferably in a range from 1.75 times to 3.5 times, more preferably in a range from 2 times to 3 times the width W1 of the polar member 11. This improves the degree of freedom of the width of the optical waveguide that allows for phase matching.

The polar member 11 can be processed to have the width W1 in a range from 100 nm to 1000 nm, and the width of the core 15 can be appropriately selected in a range from 200 nm to 2000 nm so that the fundamental wave TM$_{00}$ mode and the second harmonic TM$_{20}$ mode satisfy the transverse mode phase matching condition. When the width W1 of the polar member 11 is in a range from 100 nm to 500 nm, the width of the core 15 may be in a range from 200 nm to 1000 nm.

As illustrated in FIG. 9, a core width satisfying the phase matching condition is obtained when the angular frequency of the pump light, the angular frequency of the signal light, the refractive index of the core, and the refractive index of the cladding are determined. In this example, the phase matching condition for causing SHG from 810 nm to 405 nm has been described; however, the embodiment is not limited thereto. The wavelength conversion may be performed using an optical parametric process from 405 nm to 810 nm. In addition, the wavelength conversion may also be a conversion into an optional angular frequency by sum frequency generation or difference frequency generation. In addition, since it is only required that a set of transverse modes satisfying the phase matching condition between the pump light and the signal light is found, the phase matching is not limited to the phase matching in the TM$_{00}$ mode and the TM$_{20}$ mode, but the phase matching may be performed in higher-order modes. For example, the modes may be a TM$_{p0}$ mode and a TM$_{q0}$ mode (p and q are integers of 1 or more).

Second Embodiment

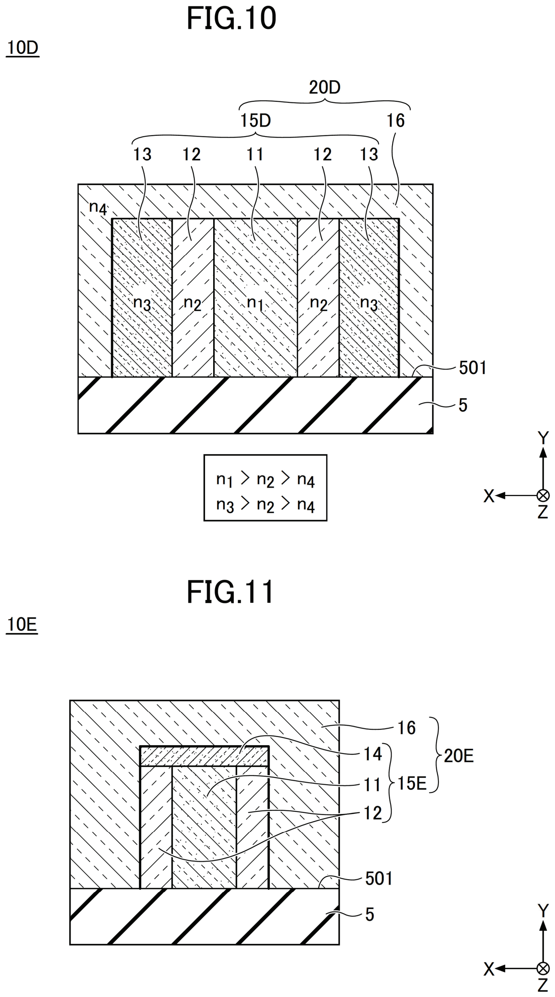

FIG. 10 is a cross-sectional view of a wavelength conversion element 10D of a second embodiment. The wavelength conversion element 10D has an optical waveguide 20D disposed on the main surface 501 of the substrate 5. A core 15D of the optical waveguide 20D includes a polar member 11 having a second-order nonlinear optical constant, first nonpolar members 12 adjacent to the polar member 11 in a direction (X direction) parallel to the main surface 501 in the XY cross section, and second nonpolar members 13 disposed outside the first nonpolar members 12 and in contact with lateral surfaces of the first nonpolar members 12. A refractive index of the second nonpolar member 13 is greater than a refractive index of the first nonpolar member 12. The expression "outside" the first nonpolar member 12 means the outside relative to the polar member 11 as the center when seen along the X direction in the XY cross section. In such a case, the first nonpolar member 12 is located between the polar member 11 and the second nonpolar member 13.

Where a refractive index of the polar member 11 is $n_1$, the refractive index of the first nonpolar member 12 is $n_2$, and the refractive index of the second nonpolar member 13 is $n_3$, their relationship is expressed as $n_1 > n_3 > n_2$. For example, GaN can be used for the polar member 11, SiO$_2$ can be used for the first nonpolar member 12, and Ta$_2$O$_5$ can be used for the second nonpolar member 13. When the wavelength and the waveguide mode are separately observed, refractive indices $n_{mat}$ of a material sensed by light with the wavelength of the pump light and sensed by light with the wavelength of the signal light are expressed as $n_{mat}(\omega_1) < n_{mat}(\omega_2)$, and the refractive index sensed by the signal light with the short wavelength is high. The magnitude relationship between the effective refractive indices in the TM$_{00}$ mode and the TM$_{20}$ mode is expressed as $n_{00} > n_{20}$, and the refractive index sensed by the TM$_{00}$ mode is greater than the refractive index sensed by the TM$_{20}$ mode. The phase matching condition $n_{00}(\omega_1) = n_{m0}(\omega_2)$ is satisfied by using the dependence of the effective refractive index on the transverse mode.

The configuration of the core 15D is adopted, and thus the light intensity can be concentrated on the polar member 11, and phase matching can be achieved by using the dispersion of the transverse mode. The signal light, which is the second harmonic in the $TM_{20}$ mode, is confined in the first nonpolar members 12 and the polar member 11 sandwiched between the first nonpolar members 12, so that the leakage of the signal light to the outside of the core 15D is reduced. Since one of the antinodes in the $TM_{20}$ mode can be concentrated on the polar member 11, the coupling constant $\kappa$ can be increased according to Math. 1, so that wavelength conversion by nonlinear polarization can be efficiently performed. In addition, the refractive index of the second nonpolar member 13 affects the pump light in the $TM_{00}$ mode, and the refractive index sensed by the pump light propagating through the core 15 is high.

In the configuration of the second embodiment, the degree of design freedom for the phase matching using the dispersion in the transverse mode is increased by selecting the refractive index of a material.

Third Embodiment

FIG. 11 is an XY cross-sectional view of a wavelength conversion element 10E of a third embodiment. The wavelength conversion element 10E has an optical waveguide 20E disposed on the main surface 501 of the substrate 5. A core 15E of the optical waveguide 20E further includes a third nonpolar member 14 disposed on an upper surface of a polar member 11 and upper surfaces of first nonpolar members 12. A refractive index of the third nonpolar member 14 is equal to or greater than a refractive index of the polar member 11. In this configuration, the third nonpolar member 14 having a refractive index equal to or greater than the refractive index of the polar member 11 allows light to be guided closer to the third nonpolar member 14 than to the substrate 5. Accordingly, light is more concentrated on the upper side of the core 15 having a satisfactory crystal state, so that loss is reduced and conversion efficiency is improved. This is because the crystal quality of the polar member 11 is better on the upper side of the core 15 than at an interface between the substrate 5 and the core 15. For example, when AlN is used for the polar member 11, $Ta_2O_5$ is used for the first nonpolar member 12, and $Nb_2O_5$ is used for the third nonpolar member 14, the refractive indices of the polar member 11 and the first nonpolar member 12 are substantially the same, and the refractive index of the third nonpolar member 14 is equal to or greater than the refractive indices of the polar member 11 and the first nonpolar member 12.

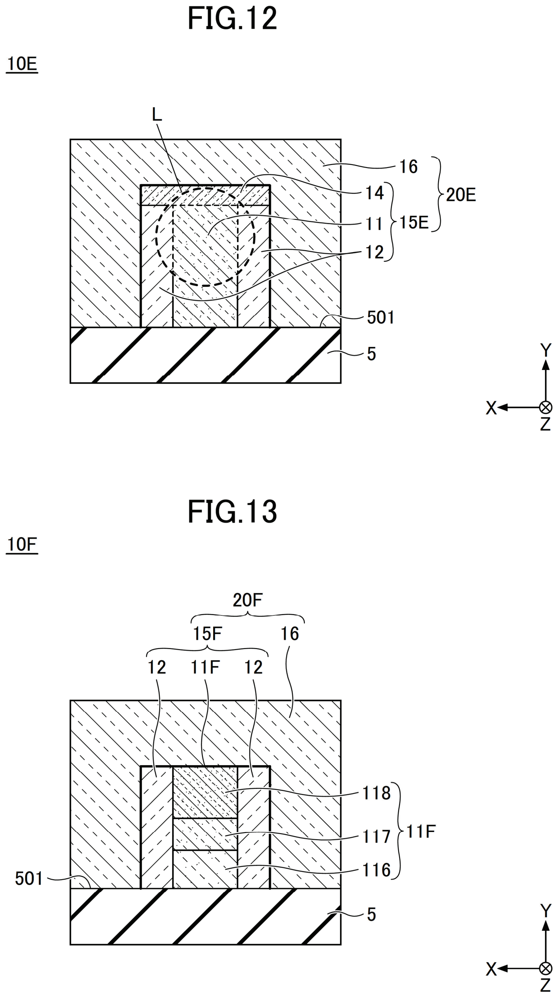

FIG. 12 is a schematic diagram of light propagating through the wavelength conversion element 10E. Light L including the pump light and the signal light is concentrated on the upper portion of the core 15E where the difference in the refractive index from a cladding 16 is significant. In this state, the effective refractive index of the pump light in the $TM_{00}$ mode, and the effective refractive index of the signal light in the $TM_{20}$ mode become equal to each other, and the phase matching condition is satisfied. The configuration of the third embodiment can reduce loss and enhance conversion efficiency by adjusting the refractive index distribution in the core 15.

Fourth Embodiment

FIG. 13 is a cross-sectional view of a wavelength conversion element 10F of a fourth embodiment. The wavelength conversion element 10F has an optical waveguide 20F disposed on the main surface 501 of the substrate 5. A core 15F of the optical waveguide 20F has a polar member 11F and first nonpolar members 12 in contact with both lateral surfaces of the polar member 11F. The polar member 11F has a first polar member 116, and a second polar member 117 and/or a third polar member 118 in the direction normal to the main surface 501 of the substrate 5. The first polar member 116 is disposed between the substrate 5 and the second polar member 117 or the third polar member 118. Refractive indices of the second polar member 117 and the third polar member 118 are both greater than a refractive index of the first polar member 116. Only one of the second polar member 117 and the third polar member 118 may be used.

When the polar member 11F is made of a nitride, the refractive indices of the first polar member 116, the second polar member 117, and the third polar member 118 may be adjusted by adjusting the composition x of $Al_xGa_{1-x}N$ ($0 \leq x \leq 1$). For example, the first polar member 116 may be made of AlGaN, and the second polar member 117 or the third polar member 118 may be made of GaN. InGaN may be used for the polar member 11F. The configuration of the fourth embodiment can also reduce loss by concentrating light on an upper side of the core 15F having a satisfactory crystal state, and improve conversion efficiency. In addition, when both the second polar member 117 and the third polar member 118 are present, the refractive index of the third polar member 118 may be greater than the refractive index of the first polar member 116 and the refractive index of the second polar member 117. This allows light to be guided closer to the third polar member 118 than to the substrate 5. Since the crystal quality of the third polar member 118 is higher than the crystal quality of the first polar member 116, light can be concentrated closer to the third polar member 118 than the first polar member 116, so that optical loss can be reduced.

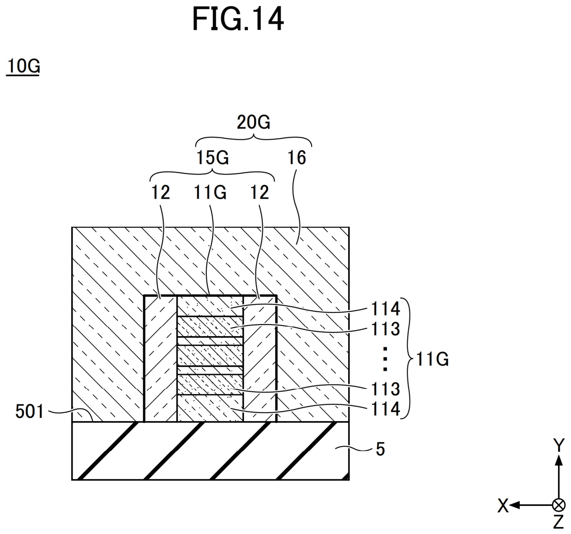

FIG. 14 is a cross-sectional view of a wavelength conversion element 10G according to a modified example of the fourth embodiment. The wavelength conversion element 10G has an optical waveguide 20G disposed on the main surface 501 of the substrate 5. A core 15G of the optical waveguide 20G has a polar member 11G and first nonpolar members 12 in contact with both lateral surfaces of the polar member 11G. The polar member 11G has a superlattice that is a periodic superposition of a plurality of types of crystal lattices. The piezoelectric field generated at a heterointerface of the superlattice increases the coupling constant $\kappa$ of the polar member 11G, thereby enhancing conversion efficiency. For example, a GaN/AlGaN superlattice is formed by layering AlGaN thin films 114 and GaN thin films 113, which are controlled to have predetermined film thicknesses, on the main surface 501 of the substrate 5 by a predetermined number of repetitions.

Fifth Embodiment

In the first to fourth embodiments or the modified examples thereof, the height of the polar member and the height of the nonpolar member may not necessarily be the same. For example, the height of the polar member may be greater or smaller than the height of the nonpolar member. The height of the polar member and the height of the nonpolar member can be appropriately set according to the values of the angular frequency $\omega_1$ and the angular frequency $\omega_2$, the combination of the materials of the polar member and the nonpolar member, the widths of the polar member and the nonpolar member, and the like. An example thereof is described below.

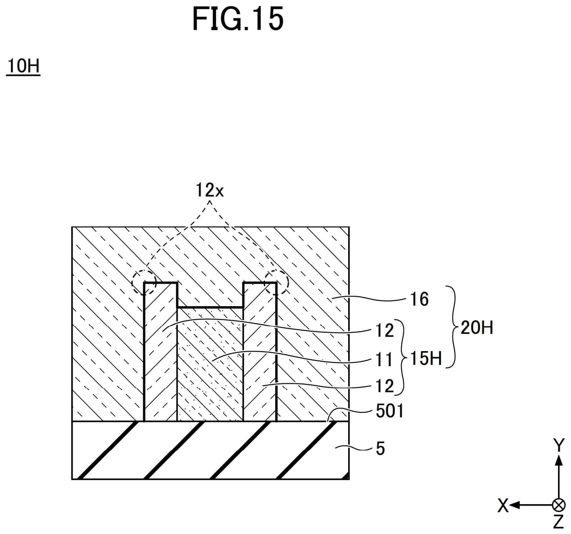

FIG. 15 is a cross-sectional view of a wavelength conversion element 10H of a fifth embodiment. The wavelength conversion element 10H has an optical waveguide 20H disposed on the main surface 501 of the substrate 5. A core 15H of the optical waveguide 20H has a polar member 11 and first nonpolar members 12 in contact with both lateral surfaces of the polar member 11. The core 15H made up of the polar member 11 and the first nonpolar members 12 is surrounded by a cladding 16. In the fifth embodiment, a height of the polar member 11 is smaller than a height of the first nonpolar member 12. For example, even though a corner portion 12x of the first nonpolar member 12 is deformed in an etching step, light propagating through the core 15H is less likely to be affected by the deformed corner portion 12x because the height of the polar member 11 is smaller than the height of the first nonpolar member 12. Accordingly, the deviation of the phase matching condition due to variations in the difference in height between the polar member 11 and the first nonpolar member 12 is small relative to a design value, so that desired wavelength conversion can be performed.

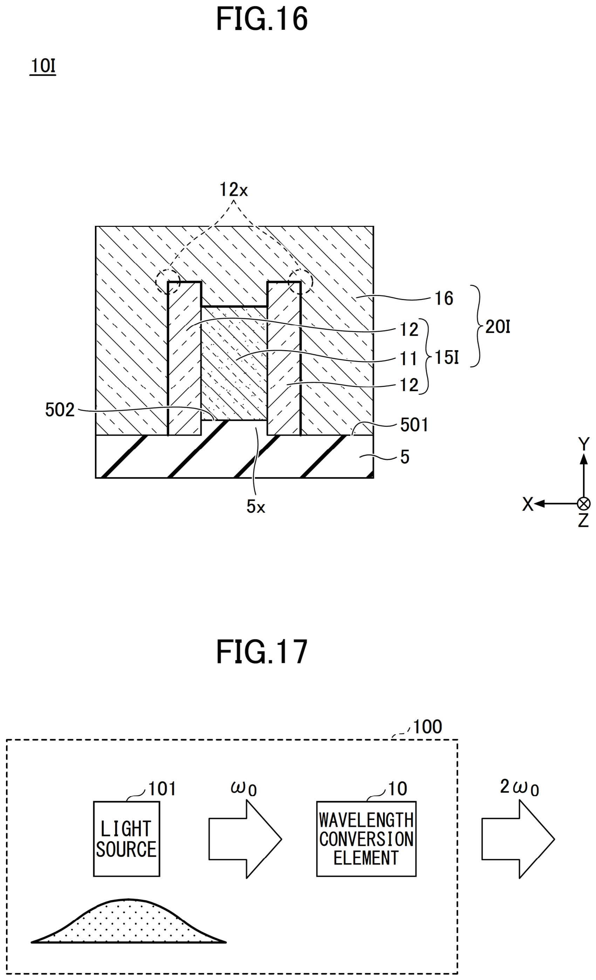

FIG. 16 is a cross-sectional view of a wavelength conversion element 10I according to a modified example of the fifth embodiment. The components other than those to be described below are the same as those of the wavelength conversion element 10H illustrated in FIG. 15. That is, the substrate 5 has a protruding portion 5x, and the polar member 11 is disposed on a main surface 502 of the protruding portion 5x. The first nonpolar member 12 is disposed on the main surface 501 of the substrate 5 where the protruding portion 5x is not provided. The first nonpolar member 12 is in contact with the polar member 11 on both lateral surfaces of the polar member 11.

The first nonpolar members 12 forming a part of a core 15I, and a part of the cladding 16 are disposed on the main surface 501 of the substrate 5. The polar member 11 forming a part of the core 15I is disposed on the main surface 502 of the protruding portion 5x of the substrate 5. Thus, in the X direction parallel to the main surface 501 of the substrate 5, the effective refractive index of a portion including the protruding portion 5x under the polar member 11 is lower than the effective refractive index of a portion including the polar member 11 in the X direction due to the inclusion of the protruding portion 5x. Accordingly, light propagating through an optical waveguide 20I is efficiently confined in the portion including the polar member 11 having a relatively high effective refractive index, so that loss due to the influence of the substrate 5 can be reduced. In addition, since the height of the polar member 11 is smaller than the height of the first nonpolar member 12, light propagating through the core 15I is less likely to be affected by the deformed corner portion 12x, similarly to the wavelength conversion element 10H illustrated in FIG. 15. Thus, the deviation of the phase matching condition due to variations in the difference in height between the polar member 11 and the first nonpolar member 12 is small relative to a design value, so that desired wavelength conversion can be performed.

Application Example of Wavelength Conversion Element

FIG. 17 is a schematic diagram of a light source device 100 using the wavelength conversion element 10 of the embodiment. The light source device 100 includes a light source 101 such as a laser diode, and the wavelength conversion element 10 optically coupled to the light source 101. The wavelength conversion element 10 may have any of the configurations of the wavelength conversion elements 10A to 10I of the above-described embodiments and the modified examples. The light source 101 emits light having an angular frequency $\omega_0$. Due to the interaction between laser light incident on the wavelength conversion element 10 and the core 15, a second harmonic having an angular frequency $2 \times \omega_0$ is generated and output from the wavelength conversion element 10. For example, when the light source 101 that emits light in a blue wavelength band is used, ultraviolet light can be emitted from the light source device 100 by SHG in the wavelength conversion element 10. The light source device 100 is used as a highly-efficient ultraviolet light source.

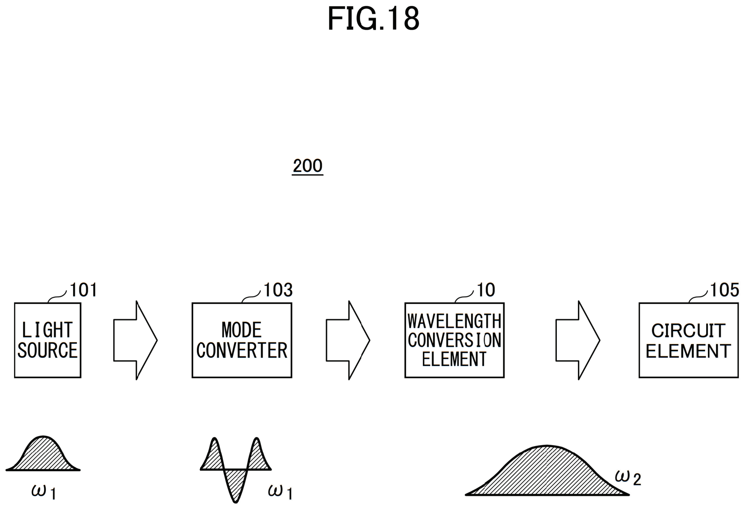

FIG. 18 is a schematic diagram of an optical circuit 200 using the wavelength conversion element 10 of the embodiment. The optical circuit 200 has the light source 101, a mode converter 103 optically coupled to the light source 101, and the wavelength conversion element 10 optically coupled to the mode converter 103. Fundamental-mode light having $\omega_1$ and emitted from the light source 101 is converted into higher-order mode light by the mode converter 103. As the mode converter 103, a Y-shaped waveguide formed of an optical waveguide, a directional coupler, a multimode interferometer, or the like can be used. The mode converter 103 may be continuously connected to the wavelength conversion element 10, or a part of the wavelength conversion element 10 may be used as the mode converter 103.

The mode-converted light having $\omega_1$ is incident on the wavelength conversion element 10 as pump light. An optical parametric process occurs due to the interaction between the pump light and the optical waveguide 20 of the wavelength conversion element 10, and photons having $\omega_2$ are generated. Signal light generated in the optical parametric process is input to a circuit element 105 constituting a sensor circuit or the like. Alternatively, signal light having a different wavelength may be incident on the wavelength conversion element 10 together with the pump light output from the mode converter 103 to cause difference frequency generation or sum frequency generation. A highly sensitive sensor using the optical parametric process can be implemented by the optical circuit 200. The wavelength conversion element 10 is a waveguide wavelength converter using phase matching by a transverse mode, and can be integrated with the mode converter 103 and the light source 101. This allows the optical circuit 200 having a simple configuration and high conversion efficiency to be implemented.

The present disclosure has been described based on the specific configuration examples, but is not limited to the configuration examples described above. The embodiments or the modified examples can be combined with each other. For example, the configuration of the polar member 11F or 11G of the fourth embodiment in FIGS. 13 and 14 may be applied to the polar member 11 in FIGS. 1, 10, and 11. The configuration of the third embodiment in FIG. 11 may be combined with the configuration of the second embodiment in FIG. 10. The wavelength conversion element of the embodiment can be used as an optical amplifier for an optical sensor, and can also be applied to a light source device that outputs ultraviolet light or mid-infrared light that is less likely to be generated by current injection.

The present disclosure, for example, may include the following configurations.

(Clause 1)

A wavelength conversion element comprising:

　　a substrate having a main surface; and
　　an optical waveguide disposed on the main surface of the substrate,
　　wherein a core of the optical waveguide comprises a polar member having a second-order nonlinear optical constant, and a first nonpolar member adjacent to the polar member in a direction parallel to the main surface of the substrate, and
　　in a cross section orthogonal to an optical axis of the optical waveguide, one or both of lateral surfaces of the polar member are in contact with the first nonpolar member.

(Clause 2)

The wavelength conversion element according to clause 1, wherein the first nonpolar member is in contact with both of the lateral surfaces of the polar member in the cross section orthogonal to the optical axis of the optical waveguide.

(Clause 3)

The wavelength conversion element according to clause 2, wherein
the core further comprises a second nonpolar member located outside the first nonpolar member when seen from the polar member in the cross section orthogonal to the optical axis, the second nonpolar member being in contact with a lateral surface of the first nonpolar member, and
a refractive index of the second nonpolar member is greater than a refractive index of the first nonpolar member.

(Clause 4)

The wavelength conversion element according to clause 1, wherein
the core further comprises a third nonpolar member disposed on an upper surface of the polar member and an upper surface of the first nonpolar member, and
a refractive index of the third nonpolar member is equal to or greater than a refractive index of the polar member.

(Clause 5)

The wavelength conversion element according to any one of clauses 1 to 4, wherein
the polar member comprises a first polar member and a second polar member in a direction normal to the main surface of the substrate,

the first polar member is located between the substrate and the second polar member, and
a refractive index of the second polar member is greater than a refractive index of the first polar member.

(Clause 6)

The wavelength conversion element according to any one of clauses 1 to 4, wherein, in the cross section orthogonal to the optical axis of the optical waveguide, a width of the core is a width in which the number of modes that can be present for a first frequency component with a first angular frequency is three or less, and is a width in which the number of modes that can be present for a second frequency component with a second angular frequency greater than the first angular frequency is two or more.

(Clause 7)

The wavelength conversion element according to any one of clauses 1 to 4, wherein, in the cross section orthogonal to the optical axis, a width of the core is in a range from 200 nm to 2000 nm.

(Clause 8)

The wavelength conversion element according to any one of clauses 1 to 4, wherein, in the cross section orthogonal to the optical axis, a width of the core is in a range from 1.5 times to 4 times a width of the polar member.

(Clause 9)

The wavelength conversion element according to any one of clauses 1 to 4, wherein the polar member is made of a wurtzite crystal having polarization along a c-axis direction.

(Clause 10)

The wavelength conversion element according to clause 9, wherein a c-axis of the polar member is perpendicular to the main surface of the substrate.

(Clause 11)]

The wavelength conversion element according to clause 9, wherein the polar member is made of $Al_xGa_{1-x}N$ ($0 \leq x \leq 1$).

(Clause 12)

The wavelength conversion element according to any one of clauses 1 to 4, wherein the first nonpolar member is an amorphous layer.

(Clause 13)

The wavelength conversion element according to any one of clauses 1 to 4, wherein the first nonpolar member is one selected from the group consisting of $Nb_2O_5$, $Ta_2O_5$, $TiO_2$, $HfO_2$, $ZrO_2$, and $Si_3N_4$.

(Clause 14)

An optical circuit comprising:

a laser element;
a mode converter optically coupled to the laser element; and
the wavelength conversion element according to any one of clauses 1 to 4, the wavelength conversion element being optically coupled to the mode converter.

(Clause 15)

A light source device comprising:

a laser element; and
the wavelength conversion element according to any one of clauses 1 to 4, the wavelength conversion element being optically coupled to the laser element. Reference Signs List

This application claims priority based on Japanese Patent Application No. 2023-105432, filed on June 27, 2023, the entire contents of which are included herein by reference.

5 Substrate
501 Main surface
10, 10A to 10I Wavelength conversion element
11, 11F, 11G Polar member
111, 112 Lateral surface
116 First polar member
117 Second polar member
118 Third polar member
12 First nonpolar member
13 Second nonpolar member
14 Third nonpolar member
15, 15A to 15I Core
16 Cladding
20, 20A to 20I Optical waveguide
100 Light source device
101 Light source
103 Mode converter
105 Circuit element
200 Optical circuit

**Claims**

1.  A wavelength conversion element comprising:

a substrate having a main surface; and
an optical waveguide disposed on the main surface of the substrate,
wherein a core of the optical waveguide comprises a polar member having a second-order nonlinear optical constant, and a first nonpolar member adjacent to the polar member in a direction parallel to the main surface of the substrate, and
in a cross section orthogonal to an optical axis of the optical waveguide, one or both of lateral surfaces of the polar member are in contact with the first nonpolar member.

2.  The wavelength conversion element according to claim 1, wherein the first nonpolar member is in contact with both of the lateral surfaces of the polar member in the cross section orthogonal to the optical axis of the optical waveguide.

3.  The wavelength conversion element according to claim 2, wherein
the core further comprises a second nonpolar member located outside the first nonpolar member when seen from the polar member in the cross section orthogonal to the optical axis, the second nonpolar member being in contact with a lateral surface of the first nonpolar member, and
a refractive index of the second nonpolar member is greater than a refractive index of the first nonpolar member.

4.  The wavelength conversion element according to claim 1, wherein
the core further comprises a third nonpolar member disposed on an upper surface of the polar member and an upper surface of the first nonpolar member, and
a refractive index of the third nonpolar member is equal to or greater than a refractive index of the polar member.

5. The wavelength conversion element according to any one of claims 1 to 4, wherein
the polar member comprises a first polar member and a second polar member in a direction normal to the main surface of the substrate,

the first polar member is located between the substrate and the second polar member, and
a refractive index of the second polar member is greater than a refractive index of the first polar member.

6. The wavelength conversion element according to any one of claims 1 to 4, wherein, in the cross section orthogonal to the optical axis of the optical waveguide, a width of the core is a width in which the number of modes that can be present for a first frequency component with a first angular frequency is three or less, and is a width in which the number of modes that can be present for a second frequency component with a second angular frequency greater than the first angular frequency is two or more.

7. The wavelength conversion element according to any one of claims 1 to 4, wherein, in the cross section orthogonal to the optical axis, a width of the core is in a range from 200 nm to 2000 nm.

8. The wavelength conversion element according to any one of claims 1 to 4, wherein, in the cross section orthogonal to the optical axis, a width of the core is in a range from 1.5 times to 4 times a width of the polar member.

9. The wavelength conversion element according to any one of claims 1 to 4, wherein the polar member is made of a wurtzite crystal having polarization along a c-axis direction.

10. The wavelength conversion element according to claim 9, wherein a c-axis of the polar member is perpendicular to the main surface of the substrate.

11. The wavelength conversion element according to claim 9, wherein the polar member is made of $Al_xGa_{1-x}N$ ($0 \leq x \leq 1$).

12. The wavelength conversion element according to any one of claims 1 to 4, wherein the first nonpolar member is an amorphous layer.

13. The wavelength conversion element according to any one of claims 1 to 4, wherein the first nonpolar member is one selected from the group consisting of $Nb_2O_5$, $Ta_2O_5$, $TiO_2$, $HfO_2$, $ZrO_2$, and $Si_3N_4$.

14. An optical circuit comprising:

a laser element;
a mode converter optically coupled to the laser element; and
the wavelength conversion element according to any one of claims 1 to 4, the wavelength conversion element being optically coupled to the mode converter.

15. A light source device comprising:

a laser element; and
the wavelength conversion element according to any one of claims 1 to 4, the wavelength conversion element being optically coupled to the laser element.

# FIG.1

# FIG.2

# FIG.3

# FIG.4

10A

# FIG.5A

# FIG.5B

W1

112    11    111

h

501

5

Y

X          Z

# FIG.5C

11

120

501

5

112        111

Y

X          Z

# FIG.5D

15A

12    11    12

501

5

112    111

Y
X ← ⊗
Z

# FIG.6A

10B

20B

15B    16

11    12B

121

501

5

112    111

Y
X ← ⊗
Z

# FIG.6B

10C

# FIG.6C

10C'

20C'

15C' 16

12B 11C 12B

115
501
5

112 111

Y
X⊗Z

# FIG.7

20

W

W1

15
16

h

12 11 12

Sub

5

Y
X⊗Z

# FIG.8A

810 nm TM$_{00}$

# FIG.8B

405 nm TM$_{20}$

# FIG.9

TM-like

TM$_{20}$

TM$_{00}$

550

$n_{eff}$

W (nm)

# FIG.10

10D

13  12  11  12  13  16

15D

20D

n4

n3  n2  n1  n2  n3

501

5

$$n_1 > n_2 > n_4$$
$$n_3 > n_2 > n_4$$

Y
X
Z

# FIG.11

10E

16
14
11
12

20E
15E

501

5

Y
X
Z

# FIG.12

10E

# FIG.13

10F

# FIG.14

10G

20G

15G    16

12    11G    12

114
113
⋮    } 11G
113
114

501

5

Y
X ← ⊗ Z

# FIG.15

10H

# FIG.16

# FIG.17

# FIG.18

EP 4 737 999 A1

## INTERNATIONAL SEARCH REPORT

| | International application No. |
|---|---|
| | **PCT/JP2024/023094** |

| A. | CLASSIFICATION OF SUBJECT MATTER |
|---|---|

*G02F 1/377*(2006.01)i
FI: G02F1/377

According to International Patent Classification (IPC) or to both national classification and IPC

| B. | FIELDS SEARCHED |
|---|---|

Minimum documentation searched (classification system followed by classification symbols)

G02F1/00-1/125; G02F1/21-7/00; G02B6/12-6/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

IEEE Xplore; SPIE Digital Library

| C. | DOCUMENTS CONSIDERED TO BE RELEVANT |
|---|---|

| Category* | Citation of document, with indication, where appropriate, of the relevant passages | Relevant to claim No. |
|---|---|---|
| A | 本田啓人、他，２３０ｎｍ遠紫外第二高調波発生に向けた横型擬似位相整合Ｈｆ０２／ＡｌＮ導波路の設計，２０２１年　第８２回応用物理学会秋季学術講演会　講演予稿集．12 September 2021, 12p-N101-7, (HONDA, Keito et al., Design of Transverse Quasi-Phase-Matched HfO2/AlN Waveguide for 230-nm Far-UV Second Harmonic Generation, abstracts of The 82nd JSAP Autumn Meeting 2021) <br> lines 1-18, fig. 1-3 | 1-15 |
| A | CN 112099286 A (UNIV TSINGHUA) 18 December 2020 (2020-12-18) <br> paragraph [0083], fig. 1 | 1-15 |
| A | JP 2021-134122 A (KABUSHIKI KAISHA TOSHIBA) 13 September 2021 (2021-09-13) <br> paragraphs [0050]-[0051], [0096], fig. 11 | 1-15 |
| A | US 2016/0178983 A1 (KARLSRUHER INST TECHNOLOGIE) 23 June 2016 (2016-06-23) <br> paragraphs [0072], [0081], [0094]-[0098], fig. 1-2 | 1-15 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 August 2024** | **10 September 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**
Information on patent family members

International application No.

**PCT/JP2024/023094**

| Patent document cited in search report | | | Publication date (day/month/year) | Patent family member(s) | | | Publication date (day/month/year) |
|---|---|---|---|---|---|---|---|
| CN | 112099286 | A | 18 December 2020 | (Family: none) | | | |
| JP | 2021-134122 | A | 13 September 2021 | US | 2021/0273057 | A1 | |
| | | | | paragraphs [0067]-[0068], [0117]-[0119], fig. 11 | | | |
| US | 2016/0178983 | A1 | 23 June 2016 | EP | 2881780 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018194617 A

- JP 2023105432 A

**Non-patent literature cited in the description**

- Design of Lateral Quasi-Phase Matched HfO2/AlN Waveguides for 230 nm Far-Ultraviolet Second Harmonic Generation. *Proceedings of the 82nd Autumn Meeting of the Japan Society of Applied Physics*, 2021, 12, N101-7

- Manufacturing of HfO2/AlN Lateral Quasi-Phase Matched Channel Waveguides for 230 nm Far-Ultraviolet Second Harmonic Generation. *Proceedings of the 69th Spring Meeting of the Japan Society of Applied Physics*, 2022 (26p-E203-6)